# EUROPÄISCHE PATENTSCHRIFT

(11) **EP 3 755 543 B1**
(45) Veröffentlichungstag und Bekanntmachung des Hinweises auf die Patenterteilung: **09.11.2022**
(21) Anmeldenummer: 19705724.3
(22) Anmeldetag: 12.02.2019
(51) Int. Cl.: B42D 25/00, B42D 25/41, B42D 25/435, B23K 26/082, B23K 37/04

(54) **VORRICHTUNG UND VERFAHREN ZUM EINBRINGEN VON INFORMATIONEN IN EINEN DATENTRÄGER**
DEVICE AND METHOD FOR RECORDING INFORMATION IN A DATA CARRIER
DISPOSITIF ET PROCÉDÉ POUR INSÉRER DES INFORMATIONS DANS UN SUPPORT DE DONNÉES

(30) Priorität: 20.02.2018 DE 102018001325
(43) Veröffentlichungstag der Anmeldung: 30.12.2020
(73) Patentinhaber: Muehlbauer GmbH & Co. KG, 93426 Roding (DE)
(72) Erfinder: EGERMANN, Sascha, 09376 Oelsnitz (DE)
(74) Vertreter: Schmidt, Steffen J.
(86) Internationale Anmeldenummer: PCT/EP2019/053404
(87) Internationale Veröffentlichungsnummer: WO 2019/162143

(56) Entgegenhaltungen:
- EP-A1- 2 733 099
- EP-A1- 3 421 398
- US-A1- 2011 149 405
- US-A1- 2014 056 680

## Beschreibung

### Hintergrund

Hier werden eine Vorrichtung und ein Verfahren zum Einbringen von Informationen in einen Datenträger offenbart. Insbesondere werden damit Informationen in einen Informationsflächenbereich eines Datenträgers aus einer Trägerschicht und einer oder mehreren transparenten Kunststoffschichten mittels eines Laserstrahls eingebracht.

Datenträger der hier angesprochenen Art sind Sicherheits- oder Identifikationsdokumente wie Reisepässe, Personalausweise, Führerscheine, Ausweiskarten, Kreditkarten, Bankkarten, Barzahlungskarten, Etiketten, Zutrittsausweise, und dergleichen. Aspekte der Vorrichtung und des Verfahrens sind sowohl in der Beschreibung, als auch in den Figuren und den Ansprüchen definiert.

Die als Sicherheits- oder Identifikationsdokumente zum Einsatz kommenden Datenträger der hier vorgestellten Art werden in der Regel bis auf ihre Personalisierungsdaten zentral gefertigt und anschließend dezentral, zum Beispiel auf Meldestellen, bei Behörden oder in zur Ausstellung derartiger Dokumente berechtigten Unternehmen mit einer Personalisierung versehen. Bei der Personalisierung werden den jeweiligen Inhaber des Sicherheits- oder Identifikationsdokuments individuell bezeichnende Personalisierungsdaten in Form von Text-, Zahlen- und/oder Bilddaten (zum Beispiel Name und Anschrift des Inhabers, Geburtsdatum, Geburtsort, Foto des Inhabers, biometrische Daten des Inhabers, etc.), sowie Ausstellungsdatum und Gültigkeitsdauer des Dokuments in das Sicherheits- oder Identifikationsdokument eingebracht. Diese Text-, Zahlen- und/oder Bilddaten sind zumindest teilweise von einem Betrachter unmittelbar lesbar.

Obwohl die Fertigung des Datenträgers und die Einbringung der individuellen Benutzerdaten einfach und kostengünstig sein soll, besteht die Anforderung, dass die Karten mit optimalem Schutz gegen Fälschung und Verfälschung ausgestaltet sein sollen.

### Stand der Technik

Aus der EP 0 216 947 B1 sind Verfahren für Laserbearbeitungssysteme zur Herstellung von Kippbild-Effekten auf Laminatverbunden und von Kippbildern bekannt. Hierbei wird im üblichen ID-1 Kreditkartenformat ein Polycarbonat-Folienverbund von mehreren dünnen Folien mit dazwischen liegenden Sicherheitsdrucken mittels Lamination erzeugt. In den Folienverbund wird mittels eines Laserstrahls alphanumerische oder graphische Information eingeschrieben. Außerdem wird in einem Hochschmelzvorgang in einer Thermotransferpresse eine Oberseite der Karte mit einem sogenannten Linsenraster versehen. Die Oberkante des Linsenrasters ist dabei bündig mit dem Kartenkörper angeordnet, so dass die Linsenoberfläche im Gebrauch der Karte geschont wird. Durch die so gebildeten Linsen des Linsenrasters wird nun zum Informationseintrag ein Laserstrahl in schräger Ausrichtung zur Kartenoberfläche gelenkt. Der Laserstrahl ist im Bereich der jeweiligen Linse fokussiert und auf eine innere Ebene der Karte gelenkt. In dieser Ebene werden durch den Laserstrahl definierte Schwärzungen erzeugt. Auf diese Weise werden zwei von der Blickrichtung des Betrachters aus gesehen abhängige Echtheitsmerkmale in die Karte eingeschrieben.

Aus der US 2003 / 0102289 A1 ist eine Vorrichtung mit einem Laserstrahl bekannt, welche die Beschriftung eines Gegenstandes von drei Seiten ermöglicht, ohne dass dessen Position verändert werden muss. Diese Vorrichtung hat einen Laserstrahler zur Abgabe eines Laserstrahls und zumindest ein Umlenkmittel, um den Laserstrahl von dem Laserstrahler auf einen Brennpunkt am Gegenstand abzubilden. Außerdem ist der Laserstrahler dazu ausgelegt, einen Laserstrahl unter zumindest zwei unterschiedlichen Austrittswinkeln abzugeben, wobei abhängig vom Austrittswinkel eines Laserstrahls aus dem Laserstrahler zumindest ein Laserstrahl einem Spiegel zugeordnet ist, so dass mindestens zwei verschiedene Seiten des Gegenstands ohne Positionsänderung des Gegenstands beschriftbar sind. In zumindest einem der Strahlengänge ist ein Spiegel vorgesehen, um die optische Weglängendifferenz zwischen dem ersten Strahlengang und dem weiteren Strahlengang auszugleichen.

Aus der DE 199 49 945 A1 ist ein kartenförmiger Datenträger aus Laminatschichten bekannt, bei dem mittels Laserstrahl visuell irreversible Veränderungen im Inneren des Datenträgers derart bewirkt werden, dass bei Betrachtung aus unterschiedlichen Blickwinkeln unterschiedliche grafische Bilder erkennbar werden und Herstellverfahren desselben. Die Laserbeschriftung der Karte erfolgt in einem ersten Verfahrensschritt ohne Zuhilfenahme eines Linsenrasters und erst in einem zweiten Verfahrensschritt wird das Linsenraster appliziert. Dieses Verfahren benötigt keinen Laserstrahl aus zwei verschiedenen Richtungen. Der gewünschte optische Kippeffekt wird dadurch erzielt, dass erst nach der Einbringung derartiger Elemente mittels Laserstrahl in ein Volumenelement eines Datenträgers die entsprechenden Mikrostrukturen aufgebracht werden, mit denen es möglich ist, die eingebrachten Elemente aus zwei verschiedenen Blickwinkeln unterschiedlich zu betrachten.

Die DE 36 34 865 A1 betrifft einen Datenträger, bei dem in einem inneren Volumenbereich Informationen mittels eines Laserstrahls irreversibel sichtbar eingebracht sind, sind sowie Verfahren zur Herstellung und Prüfung des Datenträgers, wobei die Datenträger fotografisch oder xerografisch nicht reproduzierbare Merkmale enthalten, die maschinell und auch bei schlechten Lichtverhältnissen einfach visuell prüfbar sind. In eine transparente Folienschicht eines Datenträgers, die die Deckfolie bildet, wird ein Linsenraster in Form mehrerer nebeneinander angeordneter Zylinderlinsen oder Kugellinsen eingeprägt. Diese Deckfolie ist einer weiteren transparenten Kunststoffschicht überlagert, deren optische Eigenschaften sich unter Einwirkung von Laserstrahlen verändern. Mit dem Laserstrahl werden durch diese Linsen hindurch Informationen auf darunterliegende Volumenbereiche des Datenträgers eingebracht. Der Laserstrahl wird dabei in einem bestimmten Winkel zur Ebene des Linsenrasters gehalten. Beim Durchgang durch die Linsen wird das Licht des Laserstrahls an den eingeprägten Linsen nachfokussiert. Eine auf diese Weise eingebrachte Information ist nur unter dem Winkel sichtbar, unter dem der Laserstrahl auf die Linsenrasterfläche auftraf, wobei die Information je nach Größe des verfärbten Volumenbereichs in einem mehr oder weniger großen Winkelbereich sichtbar ist.

Aus der WO 2008/055791 A1 (Mühlbauer) ist ein Verfahren und eine Vorrichtung zum Einbringen von Informationen in einen Datenträger aus einer Trägerschicht und einer transparenten Kunststoffschicht bekannt. Das Verfahren und die Vorrichtung erlauben ein schnelles und einfaches Einbringen eines Kipprelieffeldes in den Datenträger mittels eines Laserstrahls. Die Informationen werden hier in einen Informationsflächenbereich eines Datenträgers mittels des Laserstrahls einer punktartigen Laserquelle eingeschrieben. Dabei wird der Laserstrahl mittels einer Umlenkfläche vor dem Auftreffen des Laserstrahls auf dem Datenträger umgelenkt. Dazu sind die Umlenkflächen in einem Bereich zwischen der Laserquelle und dem Datenträger und außerhalb eines durch gerade fiktive Verbindungslinien zwischen der Laserquelle und Randbereichen des Informationsflächenbereichs definierten Zwischenbereichs angeordnet.

Diese Umlenkflächen oder Spiegel sind teure, empfindliche und kritische Bauteile. Die Justierung der Umlenkflächen, so dass der Laserstrahl in den Informationsflächenbereich trifft, ist relativ aufwendig. Außerdem ist die Erst-Einstellung der Umlenkflächen für einen neuen Datenträger diffizil, weil die Ausrichtung der Umlenkflächen auf den Ort und die Abmessungen des Informationsflächenbereichs auf dem Datenträger jeweils neu mit abzustimmen ist. Außerdem sind die Umlenkflächen regelmäßig zu reinigen, da sonst die Intensität des auf den Informationsflächenbereich des Datenträgers treffenden Laserstrahls beeinträchtigt ist. Hinzu kommt, dass bisher im Stand der Technik das Beschriften oder das Einbringen eines Kippbildes insbesondere bei Datenträgern in Gestalt von Passbüchern nur auf einer Seite des Datenträgers möglich ist. Das Einstellen bekannter Vorrichtungen ist aufwendig, kompliziert und ungenau, da der Informationsflächenbereich des Datenträgers erst in den Fokus des Laserstrahls gefahren werden muss.

Des Weiteren ist für die Herstellung eines Kippbildes erforderlich, die Ablenkung des Laserstrahls mit Hilfe von Spiegeln zu justieren, was sehr schwierig, teuer und kompliziert einzustellen ist. Im Stand der Technik sind auch elektronische Bauteile beim Verstellen der Spiegel mit zu bewegen, was flexible, spezielle Kabelverbindungen erfordert.

Weiterer technologischer Hintergrund ist aus EP2733099 und EP 1 705 600 A1 zu entnehmen.

### Technisches Problem

Ausgehend von dieser Situation soll eine kostengünstige und robuste Anordnung und Vorgehensweise zum Einbringen von alphanumerischen oder graphischen Informationen oder Sicherheitsmerkmalen in einen Datenträgers mittels Laserstrahl bereitgestellt werden.

### Vorgeschlagene Lösung

Zur Lösung dieses Problems wird eine Vorrichtung nach Anspruch 1 und ein Verfahren nach Anspruch 11 vorgeschlagen.

Weitere vorteilhafte Ausführungen der Vorrichtung und des Verfahrens ergeben sich aus den Unteransprüchen.

### Kurzbeschreibung der Figuren

Weitere Merkmale, Eigenschaften, Vorteile, Zweckmäßigkeiten der Vorrichtungen und der Verfahrensweisen sind der nachfolgenden Beschreibung in Verbindung mit der Zeichnung zu entnehmen. Auch mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen.

Hierbei zeigen:
Fig. 1a in einer schematischen Darstellung einen Datenträger der durch eine hier offenbarte Vorrichtung verarbeitbaren Art in Gestalt eines Passbuches von außen;
Fig. 1b in einer schematischen Darstellung einen Datenträger der durch eine hier offenbarte Vorrichtung verarbeitbaren Art in Gestalt der im Innern des Passbuches von Fig. 1a befindlichen Datenseite;
Fig. 2a in einer schematischen perspektivischen Explosionsdarstellung eine Datenträger-Aufnahme mit einer Datenträger-Abdeckung;
Fig. 2b in einer schematischen perspektivischen Darstellung die Datenträger-Aufnahme mit der Datenträger-Abdeckung außerhalb der Halterung;
Fig. 3a in einer schematischen perspektivischen Darstellung die Datenträger-Aufnahme mit der Datenträger-Abdeckung in der Halterung in einer 0°-Schwenkposition um die (X-) Schwenkachse;
Fig. 3b in einer schematischen perspektivischen Darstellung die Datenträger-Aufnahme mit der Datenträger-Abdeckung in der Halterung in einer -20°-Schwenkposition um die (X-) Schwenkachse;
Fig. 3c in einer schematischen perspektivischen Darstellung die Datenträger-Aufnahme mit der Datenträger-Abdeckung in der Halterung in einer +20°-Schwenkposition um die (X-) Schwenkachse;
Fig. 4a in einer schematischen perspektivischen Darstellung die Datenträger-Aufnahme mit der Datenträger-Abdeckung in der Halterung in einer 0°-Drehposition um die (Y-) Drehachse; und
Fig. 4b in einer schematischen perspektivischen Darstellung die Datenträger-Aufnahme mit der Datenträger-Abdeckung in der Halterung in einer 180°-Drehposition um die (Y-) Drehachse.

### Detaillierte Beschreibung von Varianten der Vorrichtungen und der Verfahrensweisen

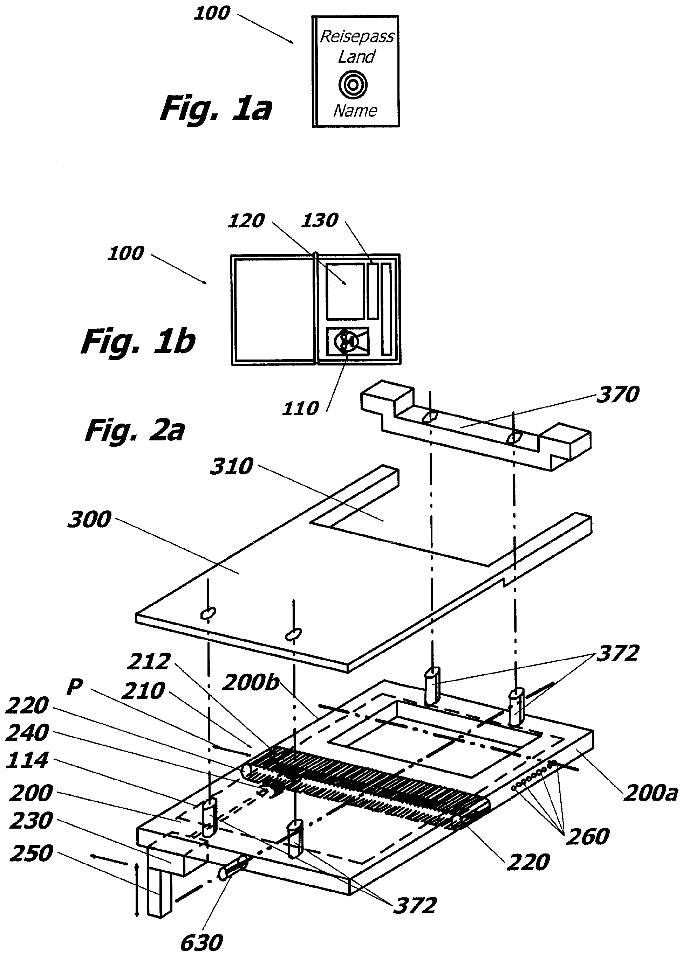

Fig. 1a zeigt einen Datenträger 100 in Gestalt eines Passbuches im ID-3-Reisepassformat von außen, bei dem zum Beispiel das Feld "Name" mittels Varianten der hier offenbarten Vorrichtung und der hier offenbarten Verfahrensweisen in der nachstehend im Einzelnen beschriebenen Weise mit dem Namen des Passinhabers zu beschriften ist.

Fig. 1b zeigt von dem Datenträger 100 in der Variante des Passbuches aus der Fig. 1a die im Innern des Passbuches befindliche Datenseite. Insbesondere sind hier ein Foto-Bildfeld 110 und ein Datenfeld 120 sowie einen Informationsflächenbereich 130 veranschaulicht, in dem in der hier gezeigten Variante des Datenträgers 100 ein MLI (multiple laser image)-Kippbild mittels Varianten der hier offenbarten Vorrichtung und der hier offenbarten Verfahrensweisen in der nachstehend im Detail beschriebenen Weise eingebracht werden kann. Das Kippbild wird per Laser in ein Linsenfeld eingebracht, welches abhängig vom Typ des Datenträgers, an unterschiedlichen Stellen auf dem Datenträger, beispielsweise an unterschiedlichen Stellen im Informationsbereich 130, angeordnet sein kann.

Fig. 2a veranschaulicht eine etwa rechteckige, an die gestrichelt angedeuteten Abmessungen 114 des Datenträgers 100 in Gestalt eines aufgeklappten Passbuches angepasste Datenträger-Aufnahme 200 mit einer Datenträger-Abdeckung 300. Die Datenträger-Aufnahme 200 ist so dimensioniert, dass der Datenträger 100 flach ausgebreitet darauf aufgenommen werden kann. In der in Fig. 2a gezeigten Orientierung befindet sich oberhalb der Datenträger-Aufnahme 200 die Datenträger-Abdeckung 300, welche dazu dient, den Datenträger 100 zwischen der Datenträger-Aufnahme 200 und der Datenträger-Abdeckung 300 zu halten und in seiner Ausrichtung zu fixieren, wenn die Gesamtanordnung mit dem Datenträger 100 in der weiter unten im Detail erläuterten Weise gedreht und/oder geschwenkt wird.

Die Datenträger-Abdeckung 300 hat eine etwa der Abmessung der Datenseite des Passbuches entsprechende rechteckige Aussparung 310.

Der Datenträger-Aufnahme 200 ist eine Datenträger-Fördereinrichtung 210 in Gestalt eines gummierten Förderbandes 212 zugeordnet. Dieses Förderband 212 umfasst die Datenträger-Aufnahme 200 etwa mittig und läuft endlos um zwei randseitige Rollen 220. Die Datenträger-Fördereinrichtung 210 hat außerdem einen Förder-Antrieb 230, der über eine Zahnwalze 240 mit dem Förderband 212 in und außer Eingriff zu bringen ist. Dazu ist der Förder-Antrieb 230 über eine Hub- oder Schwenkeinrichtung 250 seitlich gegen die Datenträger-Aufnahme 200 so anzudrücken oder von ihr weg zu schwenken , dass die Zahnwalze 240 des Förder-Antriebs 230 an dem Förderband 212 formschlüssig anliegt oder von ihm freikommt. Auf diese Weise kann der Datenträger 100, also das aufgeklappte Passbuch, im Bereich seines Rückenfalzes mit dem Förderband 212 in Eingriff kommen und so zwischen die Datenträger-Aufnahme 200 und die Datenträger-Abdeckung 300 je nach Drehrichtung des Förder-Antriebs 230 entlang des Pfeils P hinein- und wieder herausgefördert werden, dass der Informationsflächenbereich 130 des Datenträgers 100 mit der Aussparung 310 der Datenträger-Abdeckung 310 zumindest teilweise fluchtet. In einer weiteren Variante reicht von der Zahnwalze 240 zum Förderantrieb 230 eine Welle, an deren Ende ein Ritzel drehfest sitzt. Der Förderantrieb 230, an dem sich eine weitere Zahnwalze befindet, ist über diese mit dem Ritzel in Eingriff und kann durch die Hub- oder Schwenkeinrichtung 250 von dem Ritzel freikommen. Die Fördereinrichtung 210 führt das Drehen oder Schwenken der Datenträger-Aufnahme 200 mit aus, wenn diese gedreht oder geschwenkt wird.

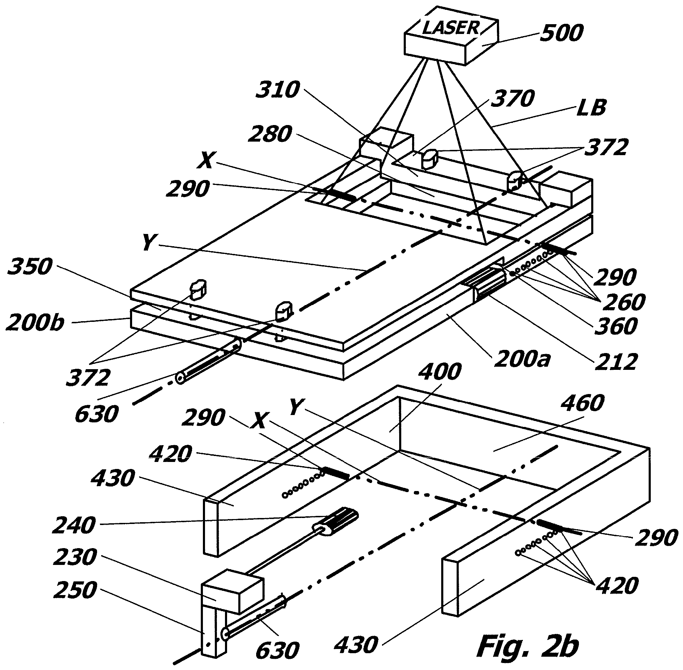

Die Datenträger-Abdeckung 300 bildet zusammen mit der Datenträger-Aufnahme 200 einen in Fig. 2b deutlich veranschaulichten Zwischenraum 350 für den Datenträger 100, wobei der Zwischenraum 350 auf beiden Seiten des Förderbandes 212 unterschiedlich hoch ist. Dazu ist die Datenträger-Abdeckung 300 auf ihrer der Datenträger-Aufnahme 200 zugewandten Seite mit einer Stufe 360 versehen. Ein an seiner Datenseite aufgeklapptes Passbuch passt damit mit seiner Datenseite an der niedrigeren Seite der Stufe 360 in den Zwischenraum 350 und mit seinen Sichtvermerk-Seiten an der höheren Seite der Stufe 360 in den Zwischenraum 350. Die Datenträger-Abdeckung 300 hat ihre Aussparung 310 auf der niedrigeren Seite der Stufe 360. In der in den Fig. 2a und 2b veranschaulichten Variante ist die Höhe des Zwischenraums 350 einstellbar. Dazu ist in dieser Variante ein Niederhalter 370 vorgesehen, der mit vier Schraubzapfen 372 und jeweiligen Tellerfedern die Höhe des Zwischenraums 350 auf die Dicke des Datenträgers 100 justierbar festlegt. In einer Variante kann der Niederhalter 370 einen Niederhalter-Antrieb aufweisen. In einer anderen Variante kann der Niederhalter 370 entfallen. Stattdessen kann die Datenträger-Abdeckung 300 einen Antrieb aufweisen, um den Datenträger zwischen der Datenträger-Abdeckung 300 und der Datenträger-Aufnahme 200 zumindest für die Dauer der Laser-Beschriftung zu klemmen.

In der Anordnung gemäß der Fig. 2b ist oberhalb der Datenträger-Aufnahme 200 und der Datenträger-Abdeckung 300 im Bereich über der Aussparung 310 der Datenträger-Abdeckung 300 eine zur gesteuerten Abgabe eines Laserstrahls eingerichtete Laserquelle 500 vorgesehen. Diese Laserquelle 500 ist hinsichtlich ihrer Energiedichte so dimensioniert, dass sie irreversible Veränderungen des Materials des Datenträgers 100 bewirken kann.

Die in der Datenträger-Abdeckung 300 vorgesehene Aussparung 310 lässt einen Laserstrahl aus der Laserquelle 500 auf einen Informationsflächenbereich 130 des zwischen der Datenträger-Aufnahme 200 und der Datenträger-Abdeckung 300 befindlichen Datenträgers 100 treffen. So ist der Informationsflächenbereich 130 des Datenträgers 100 für einen Laserstrahl aus der Laserquelle 500 zugänglich. Zur Kontrolle der Beschriftung ist in nicht weiter veranschaulichter Weise eine seitlich und oberhalb der Aussparung 310 eine Kamera angeordnet, die Bilddaten oder Positionsdaten an die Steuerung gibt, wenn der Datenträger zwischen der Datenträger-Aufnahme 200 und der Datenträger-Abdeckung 300 eingeklemmt ist.

In Fig. 2b ist eine die Datenträger-Aufnahme 200 um eine X-Schwenkachse schwenkbar aufnehmende Halterung 400 veranschaulicht. Diese Halterung 400 ist als U-förmiger Rahmen ausgestaltet, in dem die Datenträger-Aufnahme 200 schwenkbar aufgenommen ist. Die Datenträger-Aufnahme 200 hat mehrere Positionen 260, in denen die Datenträger-Aufnahme 200 um die X-Schwenkachse schwenkbar in der Halterung 400 aufgenommen ist. Der als Halterung 400 der Datenträger-Aufnahme 200 dienende, etwa rechteckige, genauer gesagt U-förmige, Rahmen hat quer zur X-Schwenkachse eine größere Abmessung als die Datenträger-Aufnahme 200, so dass die Datenträger-Aufnahme 200 in den unterschiedlichen Positionen 260 in der X-Schwenkachse zu repositionieren ist.

In diesen mehreren Positionen 260 sind in der veranschaulichten Variante an der Datenträger-Aufnahme 200 an beiden Längsseiten 200a und 200b jeweils eine Öffnung vorgesehen, in welche ein Ende eines Schwenkzapfen s 290 ragt. Das andere Ende des Schwenkzapfen s 290 ist in eine jeweilige (Durchgangs-)Öffnung 420 der Halterung 400 eingesteckt. Die Öffnungen an beiden Längsseiten 200a, 200b der Datenträger-Aufnahme 200 sind dabei für einen bestimmten Typ des Datenträgers 100, im veranschaulichten Beispiel eines Passbuchs, so auszuwählen, dass bei zwischen der Datenträger-Aufnahme 200 und der Datenträger-Abdeckung 300 aufgenommenem Datenträger 100 sich innerhalb der Aussparung 310 der Datenträger-Abdeckung 300 der Informationsflächenbereich 130 des Datenträgers 100 befindet, in den in der weiter unten beschriebenene Weise ein Kippbild einzubringen ist.

In der hier gezeigten Variante fluchten die (Durchgangs-)Öffnungen 420 an den beiden Längsseiten der Halterung 400, in der die Schwenkzapfen 290 stecken, mit dem Zentrum des von dem Laserstrahl überstrichenen Bereichs LB. So kann die Datenträger-Aufnahme 200 in ihrer Halterung 400 um die durch die Schwenkzapfen 290 in den Öffnungen 420 und die Positionen 260 definierte X-Schwenkachse geschwenkt werden. Die für einen spezifischen Typ eines Datenträgers 100 zu verwendende Position 260 an der Datenträger-Aufnahme 200 zum Einstecken des Schwenkzapfens 290 ist so auszuwählen, dass bei auf der Datenträger-Aufnahme 200 befindlichem Datenträger 100 dessen Informationsflächenbereich 130, genauer gesagt die Mittelachse eines zu beschriftenden MLI-Linsenfelds, mit der X-Schwenkachse fluchtet.

In einer nicht gezeigten Variante kann die Halterung 400 anstelle der Öffnungen 420 auch eine einzige Öffnung, beispielsweise in Form eines Langloches, aufweisen. Ein Ende des aus der Datenträger-Aufnahme 200 herausragenden Schwenkzapfens kann sich in das Langloch erstrecken und in diesem geführt sein. So kann die X-Schwenkachse stufenlos an zwei oder mehr Positionen innerhalb der einzigen Öffnung verstellt und festgelegt werden, indem der Schwenkzapfen an der gewünschten Position drehbar festgelegt wird.

Ersichtlich ist die Datenträger-Fördereinrichtung 210, und insbesondere das Förderband 212 so ausgerichtet, dass der Datenträger 100 im Wesentlichen parallel zur X-Schwenkachse auf die Datenträger-Aufnahme 200 gefördert wird.

Die Datenträger-Aufnahme 200 hat mehrere Positionen 260 entlang der Erstreckung ihrer Längsseiten 200a, 200b. Daher kann die Vorrichtung für Datenträger 100 mit unterschiedlicher Lage des Informationsflächenbereichs 130 auf der Datenseite des Datenträgers 100 einfach umgerüstet werden. Dazu sind lediglich die Schwenkzapfen 290 in andere Positionen 260 der Datenträger-Aufnahme 200 zu repositionieren. So ist die Datenträger-Aufnahme 200 in der Halterung 400 repositionierbar und um die X-Schwenkachse schwenkbar.

So ist der Laserstrahl aus der Laserquelle 500 in einen Bereich nahe und entlang der Schwenkachse auf die Datenträger-Aufnahme 200 zu richten.

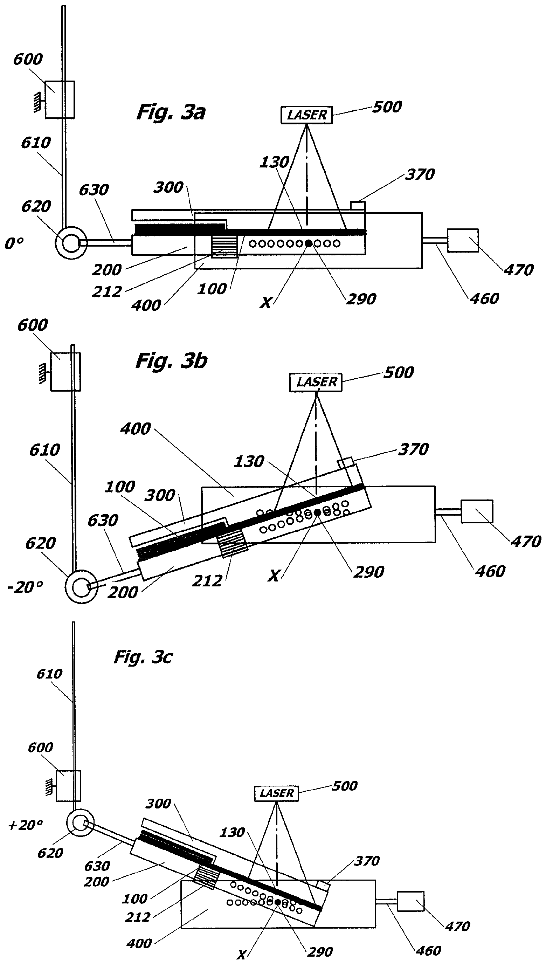

Um die Schwenkbewegungen der Datenträger-Aufnahme 200 um die X-Schwenkachse auszuführen, ist die Datenträger-Aufnahme 200 durch einen Schwenk-Antrieb 600 zwischen zwei Winkellagen, die hier schematisch mit -20°, +20° bezeichnet sind, hin und her um die durch die Schwenkzapfen 290 definierte X-Schwenkachse schwenkbar. Dies ist in den Fig. 3a, 3b und 3c veranschaulicht. Dabei veranschaulicht die Fig. 3a eine 0°-Winkellage, in der der Datenträger 100 mit der Fördereinrichtung 210 auf die Datenträger-Aufnahme 200 zu transportieren ist. In den in Fig. 3b und 3c veranschaulichten Schwenkpositionen der Datenträger-Aufnahme 200 trifft ein Laserstrahl aus der Laserquelle 500 jeweils in den Winkellagen -20° und 20° auf den Informationsflächenbereich 130 des in der Datenträger-Aufnahme 200 aufgenommenen Datenträgers 100.

Der ortsfest montierte Schwenk-Antrieb 600 hat in der hier veranschaulichten Variante eine Spindel 610, mit der ein zwischen den Winkellagen -20° und +20° bewegbares Kugelgelenk 620 auf- und abfährt, wenn der sich in die eine oder die entgegengesetzte Richtung dreht. In dem Kugelgelenk 620 ist ein Ende einer Stange 630 aufgenommen, deren anderes Ende an der Datenträger-Aufnahme 200 befestigt ist. Anstelle der Spindel 610 ist in einer anderen Variante eine Linearführung mit Riemenantrieb eingesetzt.

Wie in den Fig. 2b, 3a bis 3c veranschaulicht, hat in einer Variante der U-förmige / rechteckige Rahmen 400 zwei quer zur X-Schwenkachse verlaufende Streben 430, in denen jeweils mehrere zueinander beabstandete Öffnungen 420 für die Schwenkzapfen 290 vorgesehen sind. Wie oben erläutert, hat die Datenträger-Aufnahme 200 an ihren beiden quer zur X-Schwenkachse verlaufenden Seiten 200a, 200b jeweils mehrere zueinander beabstandete Öffnungen an den Positionen 260, in die jeweils ein Schwenkzapfen 290 einzusetzen ist, so dass die Datenträger-Aufnahme relativ zu dem Rahmen 400 um die X-Schwenkachse verschwenkbar ist.

Bevor gleichartige Datenträger 100, zum Beispiel Passbücher, mit Kippbildern in ihrem Informationsflächenbereich 130 beschrieben werden, ist die Vorrichtung in einer Vorbereitungsphase auf die geometrischen Gegebenheiten der Datenträger 100, also auf den Ort des Informationsflächenbereiches 130 auf der Datenseite des Datenträgers 100 abzustimmen.

Hierbei wird zunächst die Datenträger-Aufnahme 200 mit dem Schwenk-Antrieb 600 in die 0°-Winkellage gebracht (siehe Fig. 3a) und der Förder-Antrieb 230 über die Hub- oder Schwenkeinrichtung 250 seitlich gegen die Datenträger-Aufnahme 200 so angedrückt, dass die Zahnwalze 240 des Förder-Antriebs 230 an dem Förderband 212 formschlüssig anliegt. Nun wird der Datenträger 100 mit der Fördereinrichtung 210 durch Betätigen des Förder-Antriebs 230 auf die Datenträger-Aufnahme 200 transportiert.

Dabei wird der Datenträger 100 auf die Datenträger-Aufnahme 200 aufgebracht, so dass der Informationsflächenbereich 130 auf der Datenseite des Datenträgers 100 der Laserquelle 500 zugewandt ist. Anschließend werden die Datenträger-Aufnahme 200 und die Positionen der Öffnungen 260 auf beiden Seiten 200a und 200b der Datenträger-Aufnahme 200 so zu der Öffnung des Rahmens 420 positioniert, dass sich der Informationsflächenbereich 130 etwa mittig über der Öffnung des Rahmens 400 befindet und der Laserstrahl aus der Laserquelle 500 ebenfalls etwa mittig auf den Informationsflächenbereich 130 trifft. Wenn nun die Schwenkzapfen 290 in die Position unter dem Informationsflächenbereich 130 in die Öffnungen in den Seiten 200a, 200b durch die jeweiligen Öffnungen im Rahmen 400 gesteckt werden, ist die Ausrichtung abgeschlossen. Die X-Schwenkachse verläuft so durch die beiden Schwenkzapfen 290 und durch die Mittelachse des zu beschriftenden Linsenfeldes. Nun wird der Förder-Antrieb 230 mit der Hub- oder Schwenkeinrichtung 250 von der Datenträger-Aufnahme 200 so weggeschwenkt , dass die Zahnwalze 240 des Förder-Antriebs 230 von dem Förderband 212 weiträumig freikommt. Damit ist die Vorbereitungsphase der Vorrichtung abgeschlossen.

Die Datenträger-Aufnahme 200 kann nun in die beiden Schwenk-Positionen +20° und -20° (Fig. 3b, 3c) gebracht werden, und dort kann jeweils mit dem Laserstrahl aus der Laserquelle 500 ein Kippbild unter dem notwendigen Winkel in den Informationsflächenbereich 130 eingeschrieben werden. Es versteht sich, dass die Winkel von +20° und -20° für einige Linsenanordnungen von Kippbildern gelten, aber auch andere Winkel, zum Beispiel etwa +/-12° bis +/-15° mit dieser Vorrichtung eingenommen werden können. Dazu ist lediglich der Schwenkantrieb 600 weiter auf- oder abfahrbar auszulegen.

Ein Aspekt in der Vorbereitungsphase ist, dass mit der vorstehend erläuterten Vorbereitung die Datenträger-Aufnahme 200 um die X-Schwenkachse schwenkbar in dem Rahmen 400 aufzunehmen ist, so dass die Datenträger-Aufnahme 200 eine Schwenk-Position einnimmt, in der sich der mittels des Laserstrahls zu beschreibende Informationsflächenbereich 130 des auf der Datenträger-Aufnahme 200 befindlichen Datenträgers 100 im Wesentlichen parallel zu und nahe bei der X-Schwenkachse befindet.

In einer nachfolgenden Betriebsphase werden nacheinander einzelne, mit einem Kippbild zu versehende Datenträger 100 flächig zwischen die Datenträger-Aufnahme 200 und die im Abstand relativ zu der Datenträger-Aufnahme 200 angeordnete Datenträger-Abdeckung 300 zum Halten des Datenträgers 100 zwischen die Datenträger-Aufnahme 200 und die Datenträger-Abdeckung 300 mit der Datenträger-Fördereinrichtung 210 eingeführt. Der Informationsflächenbereich 130 des auf der Datenträger-Aufnahme 200 befindlichen Datenträgers 100 kommt dabei im Bereich der Aussparung 310 der Datenträger-Abdeckung 300 über der X-Schwenkachse zu liegen und ist dem Laserstrahl aus der Laserquelle 500 zugänglich.

Der Förder-Antrieb 230 wird nun weggeschwenkt, dabei kommt die Zahnwalze 240 von dem Förderband 212 frei. Nun schwenkt der Schwenkantrieb 600 die Datenträger-Aufnahme 200 mit der Datenträger- Abdeckung 300 und einem zwischen ihnen befindlichen Datenträger 100 um die X-Schwenkachse in eine erste Winkellage, zum Beispiel -20°. Durch ein gesteuertes Abstrahlen des Laserstrahls aus der Laserquelle 500 werden in Form irreversibler Veränderungen des Datenträgers 100 im Informationsflächenbereich 130 des Datenträgers 100 in dieser ersten Winkellage Informationen in Gestalt zum Beispiel eines Kippbildes eingebracht.

Nun schwenkt der Schwenkantrieb 600 die Datenträger-Aufnahme 200 mit der Datenträger-Abdeckung 300 und dem dazwischen befindlichen Datenträger 100 um die X-Schwenkachse in eine zweite Winkellage, zum Beispiel +20°. Auch jetzt werden durch ein gesteuertes Abstrahlen des Laserstrahls aus der Laserquelle 500 in Form irreversibler Veränderungen des Datenträgers 100 im Informationsflächenbereich 130 des Datenträgers 100 in dieser zweiten Winkellage Informationen in Gestalt zum Beispiel eines Kippbildes eingebracht.

Nun schwenkt der Schwenkantrieb 600 die Datenträger-Aufnahme 200 mit der Datenträger-Abdeckung 300 und dem dazwischen befindlichen Datenträger 100 um die X-Schwenkachse in die 0°-Winkellage. Im Übrigen verbleibt während des Beschreibens des Informationsflächenbereichs 130 des Datenträgers 100 die Halterung 400 der Datenträger-Aufnahme 200 zusammen mit der Datenträger-Aufnahme 200 um ihre quer zur X- Schwenkachse verlaufende Y- Drehachse in ihren ersten Endposition 0°.

Der Förder-Antrieb 230 wird nun eingeschwenkt, so dass die Zahnwalze 240 mit dem Förderband 212 in Eingriff kommt. Der zwischen der Datenträger-Aufnahme 200 und der Datenträger-Abdeckung 300 befindliche Datenträger 100 wird herausbefördert. Das kann in die zur Einführrichtung entgegengesetzte Richtung erfolgen, oder in dieselbe Richtung wie die Einführrichtung.

Der Betriebsphasenvorgang wird mit einem neuen Datenträger 100 wiederholt.

In einem weiteren Aspekt wird die Vorrichtung zum Einbringen von Informationen in den Datenträger 100 so ausgestaltet, dass die Halterung 400 der Datenträger-Aufnahme 200 zusammen mit der Datenträger-Aufnahme 200 um ihre quer zur X- Schwenkachse verlaufende Y- Drehachse von einer ersten Endposition 0° in eine zweite Endposition 180° gedreht werden kann. Hierbei ist die Datenträger-Aufnahme 200 in ihrer nicht um die X- Schwenkachse geschwenkten 0°- Ruhelage in der Halterung 400 gehalten. Bei diesem Dreh-Vorgang um die Y- Drehachse ist wahlweise jeweils eine erste Seite, zum Beispiel die Datenseite im Innern des Passbuchs oder eine zweite Seite des Datenträgers, zum Beispiel die äußere Vorderseite des Passbuchs zum Beschriften dem Laserstrahl der Laserquelle 500 zugewandt.

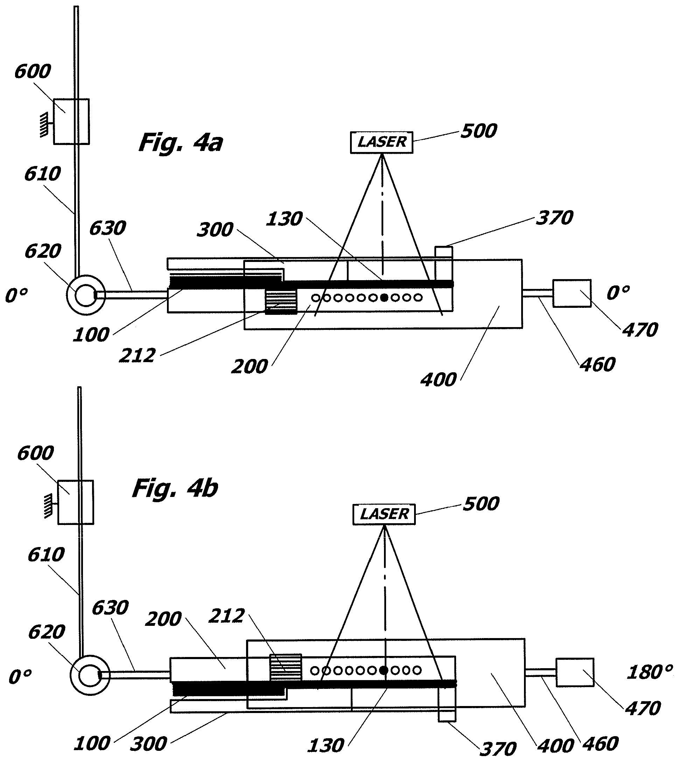

Etwa im Bereich der Aussparung 310 der Datenträger-Abdeckung 300 hat die Datenträger-Aufnahme 200 ebenfalls eine Aussparung 280, die in einer ersten Drehposition 0° (siehe Fig. 4a) um die Y- Drehachse den Informationsflächenbereich 130 des Datenträgers 100 einem Laserstrahl aus der Laserquelle 500 zugänglich macht. Dabei ist der Rahmen 400 an seinem Quersteg 460 mittig längs der Y- Drehachse mit einem Drehzapfen 470 versehen, über den ein Dreh-Antrieb 480 (nicht gezeigt) den Rahmen 400 zusammen mit dem Datenträger-Aufnahme 200, der Datenträger-Abdeckung 300 und dem zwischen ihnen befindlichen Datenträger 100 zwischen der ersten Endposition 0° (siehe Fig. 4a) und der zweiten Endposition 180° (siehe Fig. 4b) hin und her dreht. Bei einer Drehung in die zweite Endposition 180° weist die Aussparung 310 der Datenträger-Abdeckung 300 von der Laserquelle 500 weg, so dass die vom Informationsflächenbereich 130 abgelegene Seite des Datenträgers 100, also bei aufgeklapptem Passbuch die äußere Vorderseite des Passbuchs einem Laserstrahl aus der Laserquelle 500 zugänglich ist.

Diese Ausgestaltung der Vorrichtung hat zur Folge, dass die Datenträger-Aufnahme 200 durch den Dreh-Antrieb 480 zwischen den beiden zwei Winkellagen 0° und 180° hin- und her um die Y-Drehachse drehbar ist, so dass ein Laserstrahl aus der Laserquelle 500 in der ersten Winkellage 0° den Informationsflächenbereich 130, und in der zweiten Winkellage 180° die vom Informationsflächenbereich 130 abgelegene Seite des Datenträgers 100 des in der Datenträger-Aufnahme 200 aufgenommenen Datenträgers 100 trifft.

Es sei verstanden, dass sich diese vorstehend beschriebene Variante der Vorrichtung mit der oben beschriebenen Variante kombinieren lässt, wie dies auch in den Fig. veranschaulicht ist. Alternativ dazu ist in Varianten der Vorrichtung nur die Drehung um die Y-Drehachse oder das Schwenken um die X-Schwenkachse realisiert.

Auch bei Alternativen, bei denen nur die Drehung um die Y-Drehachse oder das Schwenken um die X-Schwenkachse realisiert ist, kann der Datenträger-Aufnahme 200 eine Datenträger-Fördereinrichtung 210 zugeordnet sein, die dazu eingerichtet ist, einen Datenträger 100 derart zwischen die Datenträger-Aufnahme 200 und die Datenträger-Abdeckung 300 zu fördern, dass der Informationsflächenbereich 130 des Datenträgers 100 mit der Aussparung 310 der Datenträger-Abdeckung 300 zumindest teilweise fluchtet.

Die Halterung der Datenträger-Aufnahme 200 kann bei diesen Varianten einen etwa rechteckigen Rahmen haben, der quer zur Y-Drehachse eine größere Abmessung hat als die Datenträger-Aufnahme 200, so dass die Datenträger-Aufnahme 200 zwischen der ersten und der zweiten Winkellage um die X-Drehachse hin und her zu drehen ist.

Die Datenträger-Fördereinrichtung 210 ist hier dazu eingerichtet, den Datenträger 100 im Wesentlichen längs der X-Drehachse auf die Datenträger-Aufnahme 200 zu fördern.

Die Datenträger-Fördereinrichtung 210 hat auch in dieser Variante ein um die Datenträger-Aufnahme 210 umlaufendes Förderband 212, das dazu eingerichtet ist, im Bereich eines Rückenfalzes eines als Passbuch ausgebildeten Datenträgers 100 mit diesem in Eingriff zu kommen und diesen im Wesentlichen längs der X-Drehachse zwischen die Datenträger-Aufnahme 200 und die Datenträger-Abdeckung 300 zu fördern.

Auch hier hat die Datenträger-Fördereinrichtung 210 einen Datenträgerförder-Antrieb 230, der mit dem umlaufenden Förderband 212 gesteuert in und außer Eingriff bringbar ist, um das Förderband in Umlauf zu versetzen.

Insbesondere für das Drehen des Datenträgers 100 um die X-Drehachse bietet die Datenträger-Abdeckung 300 zusammen mit der Datenträger-Aufnahme 200 einen Zwischenraum für den Datenträger 100, wobei der Zwischenraum auf beiden Seiten des Förderbandes 212 ununterschiedlich hoch ist. Insbesondere im Bereich der Aussparung 310 der Datenträger-Abdeckung 300 ist der Zwischenraum geringer ist als auf der anderen Seite des Förderbandes 212.

Die Datenträger-Abdeckung 300 bildet zusammen mit der Datenträger-Aufnahme 200 einen in Fig. 2b deutlich veranschaulichten Zwischenraum 350 für den Datenträger 100, wobei der Zwischenraum 350 auf beiden Seiten des Förderbandes 212 unterschiedlich hoch ist. Dazu ist die Datenträger-Abdeckung 300 auf ihrer der Datenträger-Aufnahme 200 zugewandten Seite mit einer Stufe 360 versehen. Ein an seiner Datenseite aufgeklapptes Passbuch passt damit mit seiner Datenseite an der niedrigeren Seite der Stufe 360 in den Zwischenraum 350 und mit seinen Sichtvermerk-Seiten an der höheren Seite der Stufe 360 in den Zwischenraum 350. Die Datenträger-Abdeckung 300 hat ihre Aussparung 310 auf der niedrigeren Seite der Stufe 360. In der in den Fig. 2a und 2b veranschaulichten Variante ist die Höhe des Zwischenraums 350 einstellbar. Dazu ist in dieser Variante ein Niederhalter 370 vorgesehen, der mit vier Schraubzapfen 372 und jeweiligen Tellerfedern die Höhe des Zwischenraums 350 auf die Dicke des Datenträgers 100 justierbar festlegt. In einer anderen Variante kann der Niederhalter 370 einen Niederhalter-Antrieb aufweisen. In einer anderen Variante kann der Niederhalter 370 entfallen. Stattdessen kann die Datenträger-Abdeckung 300 einen Antrieb aufweisen, um den Datenträger zwischen der Datenträger-Abdeckung 300 und der Datenträger-Aufnahme 200 zumindest für die Dauer der Beschriftung mit Laser zu klemmen. Es ist auch möglich, den Zwischenraum mittels zweier stirnseitiger Einstellelemente festzulegen. Die Schraubzapfen 372 können dann in entsprechenden Langlöchern der Breitenjustierung und der Aufnahme zweier Andruckfedern um die Datenträger-Abdeckung 300 auf den Datenträger 100 zu drücken.

Zwischen der Abdeckung 300 und den beiden Enden des Niederhalters 370 ist in einer weiteren Variante eine Feder vorgesehen. Der Niederhalter 370 ist seitlich verstellbar und festlegbar, um die Breite für die Auflage des zu bearbeitenden Passes in einer Vorbereitungsphase einzustellen. Der Niederhalter 370 kann jedoch auch unbeweglich zur seitlichen Führung des Datenträgers 100 an der Abdeckung 300 montiert sein.

Als weitere Alternative kann für die Klemmung des Datenträgers 100 durch den Niederhalter zusammen mit der Datenträger-Abdeckung 300 hinter dem Niederhalter und parallel dazu eine Stange vorgesehen sein. Ein Stößel, betätigt von einem Antrieb, drückt auf einen schraubenfederbelasteten gegenüber der Stange verschiebbaren Kopf am Ende der Stange. Die Spiralfeder ist um die Stange gewickelt. Am Kopf ist eine Schräge, welche die Abdeckung gegen den zu klemmenden Datenträger schiebt.

Alle diese Varianten dienen dazu, die Datenträger-Abdeckung 300 einstellbar gegen die Datenträger-Aufnahme zu klemmen.

Um gleichartige Datenträger 100, zum Beispiel Passbücher, mit Informationen zu beschreiben, werden gemäß einer Variante folgende Schritte ausgeführt:
Zunächst wird die Datenträger-Aufnahme 200 mit dem Schwenk-Antrieb 600 in die 0°-Winkellage gebracht (siehe Fig. 3a oder 4a) und der Förder-Antrieb 230 über die Hub- oder Schwenkeinrichtung 250 seitlich gegen die Datenträger-Aufnahme 200 so angedrückt, dass die Zahnwalze 240 des Förder-Antriebs 230 an dem Förderband 212 formschlüssig anliegt. Nun wird der Datenträger 100 mit der Fördereinrichtung 210 durch Betätigen des Förder-Antriebs 230 auf die Datenträger-Aufnahme 200 transportiert.

Dabei wird der Datenträger 100 auf die Datenträger-Aufnahme 200 aufgebracht, so dass der Informationsflächenbereich 130 auf der Datenseite des Datenträgers 100 der Laserquelle 500 zugewandt ist. Nun wird der Förder-Antrieb 230 mit der Hub- oder Schwenkeinrichtung 250 von der Datenträger-Aufnahme 200 so weggeschwenkt , dass die Zahnwalze 240 des Förder-Antriebs 230 von dem Förderband 212 weiträumig freikommt. Damit ist die Vorbereitungsphase der Vorrichtung abgeschlossen.

Die Datenträger-Aufnahme 200 mit dem Datenträger 100 kann nun mittels des Drehantriebs in die beiden Dreh-Positionen 0° und 180° (Fig. 4a, 4b) gebracht werden, wobei auch Positionen zwischen den beiden Dreh-Positionen 0° und 180° möglich sind, und dort können jeweils mit dem Laserstrahl aus der Laserquelle 500 (alphanumerische oder graphische) Daten in den Informationsflächenbereich 130 und/oder das Datenfeld 120 und/oder in das Foto-Bildfeld 110 eingeschrieben werden.

Dazu wird zuerst die Datenträger-Aufnahme mit der Datenträger-Abdeckung und einem dazwischen befindlichen Datenträger um eine Drehachse in eine erste Winkellage, zum Beispiel 0°, siehe Fig. 4a, positioniert. Damit befindet sich die Datenträger-Aufnahme 200 um die Y-Drehachse drehbar in dem Rahmen 400 so aufgenommen, dass die Datenträger-Aufnahme 200 eine Dreh-Position einnimmt, in der die mittels des Laserstrahls zu beschreibende Seite 130 des auf der Datenträger-Aufnahme 200 befindlichen Datenträgers 100 der Laserquelle 500 zugewandt ist.

Durch ein gesteuertes Abgeben eines Laserstrahls aus der Laserquelle 500, der zum Bewirken irreversibler Veränderungen des Datenträgers 100 mit dem Laserstrahl eingerichtet ist, werden auf die Seite des Datenträgers 100 Informationen in die Seite des Datenträgers mit dem Informationsflächenbereich eingebracht. Nun schwenkt der Drehantrieb 470 den Rahmen 400 mit der Datenträger-Aufnahme 200, der Datenträger-Abdeckung 300 und dem dazwischen befindlichen Datenträger 100 um die Y-Drehachse in eine zweite Winkellage, zum Beispiel 180°, siehe Fig. 4b. Auch jetzt werden durch ein gesteuertes Abstrahlen des Laserstrahls aus der Laserquelle 500 in Form irreversibler Veränderungen des Datenträgers 100 die äußere Vorderseite des Passbuches beschriftet in dieser zweiten Winkellage Informationen in Gestalt zum Beispiel von alphanumerischen oder graphischen Daten eingebracht.

Nun schwenkt die Halterung 400 der Datenträger-Aufnahme 200 zusammen mit der Datenträger-Aufnahme 200 um ihre quer zur X- Schwenkachse verlaufende Y- Drehachse in ihre erste Endposition 0° und der Schwenkantrieb 600 hält die Datenträger-Aufnahme 200 mit der Datenträger-Abdeckung 300 und dem dazwischen befindlichen Datenträger 100 um die X-Schwenkachse in der 0°-Winkellage.

Der Förder-Antrieb 230 wird nuneingeschwenkt , so dass die Zahnwalze 240 mit dem Förderband 212 in Eingriff kommt. Der zwischen der Datenträger-Aufnahme 200 und der Datenträger-Abdeckung 300 befindliche Datenträger 100 wird herausbefördert. Das kann in die zur Einführrichtung entgegengesetzte Richtung erfolgen, oder in dieselbe Richtung wie die Einführrichtung.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, sofern sie den Umfang der Offenbarung, die in den Ansprüchen definiert sind nicht erweitern.

## Patentansprüche

1. Eine Vorrichtung zum Einbringen von Informationen in einen Datenträger (100) hat
- eine Datenträger-Aufnahme (200) zum zumindest teilweise flächigen Aufnehmen des Datenträgers;
- eine relativ zu der Datenträger-Aufnahme (200) angeordnete Datenträger-Abdeckung (300), die zum Halten des Datenträgers (100) zwischen der Datenträger-Aufnahme und der Datenträger-Abdeckung eingerichtet ist;
- eine zur gesteuerten Abgabe eines Laserstrahls eingerichtete Laserquelle (500), die zum Bewirken irreversibler Veränderungen des Datenträgers (100) mit dem Laserstrahl eingerichtet ist;
- eine die Datenträger-Aufnahme (200) um eine Schwenkachse schwenkbar aufnehmende Halterung (400); wobei
- die Datenträger-Abdeckung (300) eine Aussparung (310) aufweist, die einen Informationsflächenbereich (130) des Datenträgers (100) einem Laserstrahl aus der Laserquelle (500) zugänglich macht;
- die Datenträger-Aufnahme (200) zwei oder mehr Positionen aufweist, in denen die Datenträger-Aufnahme (200) in der Halterung (400) repositionierbar um die Schwenkachse (X) schwenkbar aufzunehmen ist; und
- die Datenträger-Aufnahme (200) durch einen Schwenk-Antrieb (600) zwischen zwei Winkellagen hin- und her um die Schwenkachse (X) schwenkbar ist, sodass ein Laserstrahl aus der Laserquelle (500) in unterschiedlichen Auftreffwinkeln auf den Informationsflächenbereich (130) des in der Datenträger-Aufnahme (200) aufgenommenen Datenträgers (100) trifft.

2. Die Vorrichtung zum Einbringen von Informationen in einen Datenträger (100) nach Anspruch 1, bei der der Datenträger-Aufnahme (200) eine Datenträger-Fördereinrichtung (210) zugeordnet ist, die dazu eingerichtet ist, einen Datenträger (100) derart zwischen die Datenträger-Aufnahme (200) und die Datenträger-Abdeckung (300) zu fördern, dass der Informationsflächenbereich (130) des Datenträgers mit der Aussparung (310) der Datenträger-Abdeckung zumindest teilweise fluchtet.

3. Die Vorrichtung zum Einbringen von Informationen in einen Datenträger (100) nach Anspruch 1 oder 2, bei der der Laserstrahl aus der Laserquelle (500) in einen Bereich nahe und entlang der Schwenkachse (X) auf die Datenträger-Aufnahme (200) zu richten ist.

4. Die Vorrichtung zum Einbringen von Informationen in einen Datenträger (100) nach Anspruch 1, 2 oder 3, bei der die Halterung der Datenträger-Aufnahme (200) einen etwa rechteckigen Rahmen (400) aufweist, der quer zur Schwenkachse (X) eine größere Abmessung hat als die Datenträger-Aufnahme, so dass die Datenträger-Aufnahme in den unterschiedlichen Positionen in der Schwenkachse zu repositionieren ist.

5. Die Vorrichtung zum Einbringen von Informationen in einen Datenträger (100) nach einem der vorhergehenden Ansprüche, bei der
- der rechteckige Rahmen (400) zwei quer zur Schwenkachse (X) verlaufende Streben (430) aufweist, in denen jeweils mehrere zueinander beabstandete Öffnungen (420) vorgesehen sind, und/oder
- die Datenträger-Aufnahme (200) an ihren beiden quer zur Schwenkachse (X) verlaufenden Seiten jeweils mit mehreren zueinander beabstandeten Öffnungen (260) versehen ist, in die jeweils ein Schwenkzapfen (290) einzusetzen ist, der die Datenträger-Aufnahme relativ zu dem Rahmen um die Schwenkachse (X) verschwenkbar lagert.

6. Die Vorrichtung zum Einbringen von Informationen in einen Datenträger (100) nach einem der vorhergehenden Ansprüche 2 bis 5, bei der die Datenträger-Fördereinrichtung (210) dazu eingerichtet ist, den Datenträger im Wesentlichen parallel zur Schwenkachse (X) auf die Datenträger-Aufnahme (200) zu fördern.

7. Die Vorrichtung zum Einbringen von Informationen in einen Datenträger (100) nach einem der vorhergehenden Ansprüche 2 bis 6, bei der die Datenträger-Fördereinrichtung (210) ein um die Datenträger-Aufnahme (200) umlaufendes Förderband (212) aufweist, das dazu eingerichtet ist, im Bereich eines Rückenfalzes eines als Passbuch ausgebildeten Datenträgers (100) mit diesem in Eingriff zu kommen und diesen im Wesentlichen parallel zur Schwenkachse (X) zwischen die Datenträger-Aufnahme (200) und die Datenträger-Abdeckung (300) zu fördern.

8. Die Vorrichtung zum Einbringen von Informationen in einen Datenträger (100) nach einem der vorhergehenden Ansprüche, bei der die Datenträger-Fördereinrichtung (210) einen Datenträgerförder-Antrieb (230) aufweist, der mit dem umlaufenden Förderband (212) gesteuert in und außer Eingriff bringbar ist, um das Förderband in Umlauf zu versetzen.

9. Die Vorrichtung zum Einbringen von Informationen in einen Datenträger (100) nach einem der vorhergehenden Ansprüche, bei der die Datenträger-Abdeckung (300) zusammen mit der Datenträger-Aufnahme (200) einen Zwischenraum für den Datenträger (100) bietet, wobei der Zwischenraum (350) auf beiden Seiten des Förderbandes (212) unterschiedlich hoch ist, und insbesondere im Bereich der Aussparung der Datenträger-Abdeckung (300) geringer ist als auf der anderen Seite des Förderbandes.

10. Die Vorrichtung zum Einbringen von Informationen in einen Datenträger (100) nach dem vorhergehenden Anspruch, bei der die Höhe des Zwischenraums (350) einstellbar ist, und insbesondere mittels eines Niederhalters die Höhe des Zwischenraums (350) zu justieren ist.

11. Ein Verfahren zum Einbringen von Informationen in einen Datenträger (100), wobei in einer Vorbereitungsphase:
- eine Datenträger-Aufnahme (200), welche zwei oder mehr Schwenk-Positionen aufweist, in denen die Datenträger-Aufnahme (200) in einer Halterung (400) repositionierbar um eine Schwenkachse (X) schwenkbar aufzunehmen ist, in eine Schwenk-Position zu bringen ist, in der sich ein mittels eines Laserstrahls zu beschreibender Informationsflächenbereich (130) eines auf der Datenträger-Aufnahme befindlichen Datenträgers (100) im Wesentlichen parallel zu und nahe bei der Schwenkachse befindet; und
in einer Betriebsphase:
- zumindest teilweise flächiges Einbringen des Datenträgers (100) zwischen eine Datenträger-Aufnahme (200) und eine relativ zu der Datenträger-Aufnahme angeordnete Datenträger-Abdeckung (300) zum Halten des Datenträgers zwischen der Datenträger-Aufnahme und der Datenträger-Abdeckung, wobei die Datenträger-Abdeckung eine Aussparung (310) aufweist, die einen Informationsflächenbereich des Datenträgers (130) dem Laserstrahl aus einer Laserquelle (500) zugänglich macht;
- Schwenken der Datenträger-Aufnahme (200) mit der Datenträger-Abdeckung (300) und einem zwischen ihnen befindlichen Datenträger (100) um die Schwenkachse (X) in eine erste Winkellage;
- gesteuertes Abstrahlen eines Laserstrahls aus einer Laserquelle (500), die zum Bewirken irreversibler Veränderungen des Datenträgers (100) mit dem Laserstrahl eingerichtet ist, auf den Informationsflächenbereich (130) des Datenträgers in der ersten Winkellage um Informationen in den Informationsflächenbereich des Datenträgers einzubringen;
- Schwenken der Datenträger-Aufnahme (200) mit der Datenträger-Abdeckung (300) und dem dazwischen befindlichen Datenträger (100) um die Schwenkachse (X) in eine zweite Winkellage;
- gesteuertes Abstrahlen eines Laserstrahls aus der Laserquelle (500) auf den Informationsflächenbereich (130) des Datenträgers in der zweiten Winkellage um Informationen in den Informationsflächenbereich (130) des Datenträgers einzubringen; und
- Abgeben des Datenträgers (100) von der Datenträger-Aufnahme (200).

## Claims

1. An apparatus for introducing information into a data carrier (100) comprises
- a data carrier receptacle (200) for at least partially receiving the data carrier over an area;
- a data carrier cover (300) disposed relative to the data carrier receptacle (200) and adapted to hold the data carrier (100) between the data carrier receptacle and the data carrier cover; and
- a laser source (500) adapted to controllably emit a laser beam and adapted to cause irreversible changes to the data carrier (100) with the laser beam; and
- a mount (400) which receives the data carrier receptacle (200) in such a manner that it is pivotable about a pivot axis; wherein
- the data carrier cover (300) has a recess (310) that makes an information area (130) of the data carrier (100) accessible to a laser beam from the laser source (500);
- the data carrier receptacle (200) has two or more positions in which the data carrier receptacle (200) is repositionably receivable in the mount (400) pivotably about the pivot axis (X); and
- the data carrier receptacle (200) is pivotable back and forth about the pivot axis (X) between two angular positions by a pivot drive (600) so that a laser beam from the laser source (500) impinges on the information area (130) of the data carrier (100) received in the data carrier receptacle (200) at different incident angles.

2. The apparatus for introducing information into a data carrier (100) according to claim 1, in which a data carrier conveying apparatus (210) is assigned to the data carrier receptacle (200), which is set up to convey a data carrier (100) between the data carrier receptacle (200) and the data carrier cover (300) in such a way that the information surface area (130) of the data carrier is at least partially aligned with the recess (310) of the data carrier cover.

3. The apparatus for introducing information into a data carrier (100) according to claim 1 or 2, wherein the laser beam from the laser source (500) is to be directed to a region near and along the pivot axis (X) onto the data carrier receptacle (200).

4. The apparatus for introducing information into a data carrier (100) according to claim 1, 2 or 3, wherein the holder of the data carrier receptacle (200) comprises an approximately rectangular mount (400), which has a larger dimension transversely to the pivot axis (X) than the data carrier receptacle, so that the data carrier receptacle is to be repositioned in the different positions in the pivot axis.

5. The apparatus for introducing information into a data carrier (100) according to any one of the preceding claims, in which
- the rectangular mount (400) comprises two struts (430) extending transversely to the pivot axis (X), in each of which a plurality of mutually spaced openings (420) are provided, and/or
- the data carrier holder (200) is provided on its two sides extending transversely to the pivot axis (X) in each case with a plurality of spaced-apart openings (260) into each of which a pivot pin (290) is to be inserted which supports the data carrier holder pivotably relative to the frame about the pivot axis (X).

6. The apparatus for introducing information into a data carrier (100) according to any one of the preceding claims 2 to 5, wherein the data carrier conveying means (210) is arranged to convey the data carrier substantially parallel to the pivot axis (X) onto the data carrier receptacle (200).

7. The apparatus for introducing information into a data carrier (100) according to one of the preceding claims 2 to 6, in which the data carrier conveying apparatus (210) has a conveyor belt (212) which circulates around the data carrier receptacle (200) and is set up to engage with a data carrier (100) in the form of a passport book in the region of a spine fold of said data carrier and to convey said data carrier essentially parallel to the pivot axis (X) between the data carrier receptacle (200) and the data carrier cover (300).

8. The apparatus for introducing information into a data carrier (100) according to any one of the preceding claims, wherein the data carrier conveying means (210) comprises a data carrier conveying drive (230) controllably engageable with and disengageable from the circulating conveyor belt (212) to cause the conveyor belt to circulate.

9. The apparatus for introducing information into a data carrier (100) according to any one of the preceding claims, wherein the data carrier cover (300) together with the data carrier receptacle (200) provides an intermediate space for the data carrier (100), the intermediate space (350) being of different height on both sides of the conveyor belt (212), and in particular being smaller in the region of the recess of the data carrier cover (300) than on the other side of the conveyor belt.

10. The apparatus for introducing information into a data carrier (100) according to the preceding claim, in which the height of the space (350) is adjustable, and in particular by means of a hold-down apparatus the height of the intermediate space (350) is to be adjusted.

11. A method for inserting information into a data carrier (100), wherein in a preparation phase:
- a data carrier receptacle (200), which has two or more pivot positions in which the data carrier receptacle (200) is to be received in a holder (400) so as to be repositionable about a pivot axis (X), is to be brought into a pivot position in which an information area (130), to be inscribed by means of a laser beam, of a data carrier (100) located on the data carrier receptacle is located substantially parallel to and close to the pivot axis; and
in an operating phase:
- at least partially flat inserting the data carrier (100) between a data carrier receptacle (200) and a data carrier cover (300) disposed relative to the data carrier receptacle for holding the data carrier between the data carrier receptacle and the data carrier cover, the data carrier cover having a recess (310) that makes an information surface area of the data carrier (130) accessible to the laser beam from a laser source (500);
- pivoting the data carrier receptacle (200) with the data carrier cover (300) and a data carrier (100) located therebetween about the pivot axis (X) to a first angular position;
- controllably irradiating a laser beam from a laser source (500) adapted to cause irreversible changes to the data carrier (100) with the laser beam, onto the information area (130) of the data carrier in the first angular position to introduce information into the information area of the data carrier;
- pivoting the data carrier holder (200) with the data carrier cover (300) and the data carrier (100) located therebetween about the pivot axis (X) to a second angular position;
- controllably emitting a laser beam from the laser source (500) onto the information area (130) of the data carrier in the second angular position to introduce information into the information area (130) of the data carrier; and
- dispensing the data carrier (100) from the data carrier receptacle (200).

## Revendications

1. Un dispositif pour introduire des informations dans un support de données (100) a
- un logement de support de données (200) pour recevoir au moins partiellement à plat le support de données ;
- un couvercle de support de données (300) disposé par rapport au logement de support de données (200), qui est conçu pour maintenir le support de données (100) entre le logement de support de données et le couvercle de support de données ;
- une source laser (500) conçue pour l'émission contrôlée d'un faisceau laser, qui est conçue pour provoquer des modifications irréversibles du support de données (100) avec le faisceau laser ;
- un support (400) recevant le logement de support de données (200) de manière à pouvoir pivoter autour d'un axe de pivotement ; dans lequel
- le couvercle de support de données (300) présente un évidement (310) qui rend une zone de surface d'information (130) du support de données (100) accessible à un faisceau laser provenant de la source laser (500) ;
- le logement de support de données (200) présente deux ou plusieurs positions dans lesquelles le logement de support de données (200) peut être reçu dans le support (400) de manière à pouvoir être repositionné et à pouvoir pivoter autour de l'axe de pivotement (X) ; et
- le logement de support de données (200) peut être pivoté en va-et-vient autour de l'axe de pivotement (X) entre deux positions angulaires par un entraînement de pivotement (600), de sorte qu'un rayon laser provenant de la source laser (500) frappe la zone de surface d'information (130) du support de données (100) logé dans le logement de support de données (200) sous différents angles d'incidence.

2. Le dispositif pour introduire d'informations dans un support de données (100) selon la revendication 1, dans lequel un dispositif de transport de support de données (210) est associé au logement de support de données (200), lequel est conçu pour transporter un support de données (100) entre le logement de support de données (200) et le couvercle de support de données (300) de telle sorte que la zone de surface d'information (130) du support de données soit au moins partiellement alignée avec l'évidement (310) du couvercle de support de données.

3. Le dispositif pour introduire d'informations dans un support de données (100) selon la revendication 1 ou 2, dans lequel le faisceau laser doit être dirigé à partir de la source laser (500) dans une zone proche de l'axe de pivotement (X) et le long de celui-ci sur le logement de support de données (200).

4. Le dispositif pour introduire d'informations dans un support de données (100) selon la revendication 1, 2 ou 3, dans lequel le support du logement de support de données (200) présente un cadre (400) à peu près rectangulaire qui, transversalement à l'axe de pivotement (X), a une dimension supérieure à celle du logement de support de données, de sorte que le logement de support de données doit être repositionné dans les différentes positions dans l'axe de pivotement.

5. Le dispositif pour introduire d'informations dans un support de données (100) selon l'une des revendications précédentes, dans lequel
- le cadre rectangulaire (400) comporte deux entretoises (430) transversales à l'axe de pivotement (X), dans lesquelles sont prévues respectivement plusieurs ouvertures (420) espacées les unes des autres, et/ou
- le logement de support de données (200) est pourvu, sur chacun de ses deux côtés s'étendant transversalement à l'axe de pivotement (X), de plusieurs ouvertures (260) espacées les unes des autres, dans chacune desquelles doit être inséré un tourillon de pivotement (290) qui loge le logement de support de données de manière à ce qu'il puisse pivoter par rapport au cadre autour de l'axe de pivotement (X).

6. Le dispositif pour introduire d'informations dans un support de données (100) selon l'une des revendications précédentes 2 à 5, dans lequel le dispositif de transport de support de données (210) est conçu pour transporter le support de données sensiblement parallèlement à l'axe de pivotement (X) sur le logement de support de données (200).

7. Le dispositif pour introduire d'informations dans un support de données (100) selon l'une des revendications précédentes 2 à 6, dans lequel le dispositif de transport de support de données (210) présente une bande transporteuse (212) tournant autour du logement de support de données (200), qui est conçue pour venir en contact avec un support de données (100) conçu comme un livre de passeport dans la zone d'une pliure dorsale et pour transporter ce support de données essentiellement parallèlement à l'axe de pivotement (X) entre le logement de support de données (200) et le couvercle de support de données (300).

8. Le dispositif pour introduire d'informations dans un support de données (100) selon l'une des revendications précédentes, dans lequel le dispositif de transport de support de données (210) présente un entraînement de transport de support de données (230) qui peut être mis en prise et hors de prise de manière commandée avec la bande transporteuse en circulation (212) afin de mettre la bande transporteuse en circulation.

9. Le dispositif pour introduire d'informations dans un support de données (100) selon l'une des revendications précédentes, dans lequel le couvercle du support de données (300) offre, conjointement avec le logement du support de données (200), un espace intermédiaire pour le support de données (100), l'espace intermédiaire (350) ayant une hauteur différente de part et d'autre de la bande transporteuse (212), et étant notamment plus petit au niveau de l'évidement du couvercle du support de données (300) que de l'autre côté de la bande transporteuse.

10. Le dispositif pour introduire d'informations dans un support de données (100) selon la revendication précédente, dans lequel la hauteur de l'espace intermédiaire (350) est réglable, et en particulier la hauteur de l'espace intermédiaire (350) est à ajuster au moyen d'un serre-flan.

11. Un procédé pour introduire d'informations dans un support de données (100), dans lequel, dans une phase de préparation :
- un logement de support de données (200), qui présente deux ou plusieurs positions de pivotement dans lesquelles le logement de support de données (200) doit être logé dans un support (400) de manière à pouvoir être repositionné et à pouvoir pivoter autour d'un axe de pivotement (X), doit être amené dans une position de pivotement dans laquelle une zone de surface d'information (130) d'un support de données (100) se trouvant sur le logement de support de données et devant être décrite au moyen d'un rayon laser se trouve essentiellement parallèle à l'axe de pivotement et proche de celui-ci ; et
dans une phase de fonctionnement :
- introduction au moins partiellement plane du support de données (100) entre un logement de support de données (200) et un couvercle de support de données (300) disposé par rapport au logement de support de données pour maintenir le support de données entre le logement de support de données et le couvercle de support de données, le couvercle de support de données présentant un évidement (310) qui rend une zone de surface d'information du support de données (130) accessible au faisceau laser provenant d'une source laser (500) ;
- pivotement du logement de support de données (200) avec le couvercle de support de données (300) et un support de données (100) se trouvant entre eux autour de l'axe de pivotement (X) dans une première position angulaire ;
- l'émission commandée d'un faisceau laser à partir d'une source laser (500), qui est conçue pour provoquer des modifications irréversibles du support de données (100) avec le faisceau laser, sur la zone de surface d'information (130) du support de données dans la première position angulaire afin d'introduire des informations dans la zone de surface d'information du support de données ;
- pivotement du logement de support de données (200) avec le couvercle de support de données (300) et le support de données (100) se trouvant entre eux autour de l'axe de pivotement (X) dans une deuxième position angulaire ;
- l'émission contrôlée d'un faisceau laser à partir de la source laser (500) sur la zone de surface d'information (130) du support de données dans la deuxième position angulaire afin d'introduire des informations dans la zone de surface d'information (130) du support de données ; et
- la distribution du support de données (100) à partir du réceptacle de support de données (200).
